# FASCICULE DE BREVET EUROPEEN

(11) **EP 0 881 574 B1**
(45) Date de publication et mention de la délivrance du brevet: **30.07.2003**
(21) Numéro de dépôt: 98401147.8
(22) Date de dépôt: 14.05.1998
(51) Int. Cl.: G06F 11/34, G06F 12/08

(54) **Dispositif d'instrumentation pour machine avec mémoire à accès non uniforme.**
Instrumentationsanordnung für eine Maschine mit nichtuniformen Speicherzugriffen
Instrumentation device for a non-uniform memory access machine

(30) Priorité: 26.05.1997 FR 9706387
(43) Date de publication de la demande: 02.12.1998
(73) Titulaire: BULL S.A., 78430 Louveciennes (FR)
(72) Inventeur: Bordaz, Thierry, 38420 Domère (FR); Sorace, Jean-Dominique, 38190 Lancey (FR)
(74) Mandataire: Jacobson, Claude

(56) Documents cités:
- US-A- 4 068 304
- LENOSKI D ET AL: "THE DASH PROTOTYPE: LOGIC OVERHEAD AND PERFORMANCE" IEEE TRANSACTIONS ON PARALLEL AND DISTRIBUTED SYSTEMS, vol. 4, no. 1, 1 janvier 1993, pages 41-61, XP000381324
- VERGHESE B ET AL: "OPERATING SYSTEM SUPPORT FOR IMPROVING DATA LOCALITY ON CC-NUMA COMPUTE SERVERS" ACM SIGPLAN NOTICES, vol. 31, no. 9, septembre 1996, pages 279-289, XP000639239
- ROTH C ET AL: "PERFORMANCE MONITORING ON THE POWERPCTM 604 MICROPROCESSOR" INTERNATIONAL CONFERENCE ON COMPUTER DESIGN: VLSI IN COMPUTERS AND PROCESSORS, AUSTIN, OCT. 2 - 4, 1995, 2 octobre 1995, pages 212-215, XP000631915 INSTITUTE OF ELECTRICAL AND ELECTRONICS ENGINEERS
- LENOSKI D. ET AL.: 'The directory-based protocol for the DASH multiprocessor' IEEE PROCEEDINGS OF THE 17TH INTERNATIONAL SYMPOSIUM ON COMPUTER ARCHITECTURE Mai 1990, pages 148 - 159

## Description

L'invention concerne un dispositif d'instrumentation pour machine avec mémoire à accès non uniforme, dans le domaine informatique.

Dans le domaine informatique, il est possible d'augmenter la puissance d'une machine en augmentant le nombre de processeurs dont elle est composée. Un type de machines connu sous le nom SMP permet aux différents processeurs d'une même machine d'accéder de façon symétrique à sa mémoire au moyen d'un bus système. Ce sont des machines avec mémoire à accès uniforme dans la mesure où le temps d'accès à la mémoire est sensiblement le même pour toutes les données accédées. Cependant, la courbe de performances de telles machines ne croit pas de façon linéaire en fonction du nombre de processeurs. Un nombre élevé de processeurs fait que la machine gère plus de problèmes d'accessibilité à ses ressources qu'elle n'en dispose pour exécuter des applications. Ceci a pour conséquence d'infléchir considérablement la courbe de performances lorsque le nombre de processeurs dépasse une valeur optimale souvent estimée de l'ordre de quatre. L'état de la technique propose différentes solutions à ce problème.

Une solution connue consiste à regrouper en grappes plusieurs machines de façon à les faire communiquer entre elles au moyen d'un réseau. Chaque machine possède un nombre optimal, par exemple de quatre processeurs et son- propre système d'exploitation. Elle établit une communication avec une autre machine toutes les fois qu'elle effectue un traitement sur des données détenues à jour par cette autre machine. Le temps nécessaire à ces communications et la nécessité de travailler sur des données cohérentes posent des problèmes de latence pour des applications volumineuses telles que par exemple les applications réparties qui demandent de nombreuses communications. La latence est la durée qui sépare l'instant d'émission d'une requête d'accès à la mémoire et l'instant auquel la réponse à cette requête est reçue.

Une autre solution connue est celle des machines de type NUMA. Ce sont des machines avec mémoire à accès non uniforme (Non Uniform Memory Access en anglais), dans la mesure où le temps d'accès à la mémoire varie selon la localisation des données accédées. Une machine de type NUMA est constituée de plusieurs modules, chaque module comprenant un nombre optimal de processeurs et une partie physique de la mémoire totale de la machine. Une telle machine est à accès mémoire non uniforme car un module accède généralement plus facilement à une partie physique de la mémoire qu'il ne partage pas avec un autre module qu'à une partie qu'il partage. Bien que chaque module possède un bus système privé reliant ses processeurs et sa mémoire physique, un système d'exploitation commun à tous les modules permet de considérer l'ensemble des bus systèmes privés comme un seul et unique bus système de la machine. Un adressage logique affecte un lieu de résidence à un emplacement de mémoire physique déterminé d'un module. Pour un processeur considéré, on distingue les accès à une partie de mémoire locale, située physiquement sur le même module que le processeur et les accès à une partie de mémoire distante, située physiquement sur un ou plusieurs autres modules que celui où est situé le processeur.

Un type particulier de machines NUMA est le type CCNUMA, c'est-à-dire celui des machines à cohérence antémémoire (Cache Coherency en anglais). Un mécanisme d'antémémoire partagée fait qu'à un instant donné, une copie valide, c'est-à-dire à jour, de ce bloc n'est pas nécessairement localisée dans son emplacement de mémoire physique de résidence. Une ou plusieurs copies valides du bloc peuvent ainsi migrer d'un module à l'autre au gré des demandes applicatives et de demandes système. Les performances de la machine dépendent directement de la rapidité avec laquelle un module accède à une copie valide de bloc qu'il traite. Il est conseillé de prévoir le système d'exploitation de la machine et les applications exécutées par cette machine, de façon à ce que chaque module traite au maximum des copies de blocs localisés dans sa mémoire physique et autant que possible valides. Les accès à ces copies valides sont les plus rapides car ce sont ceux qui nécessitent le moins de transactions avec d'autres modules.

La conception d'un système d'exploitation, puis ultérieurement d'applications, nécessite de correctement prendre en compte les répercussions qu'elle entraîne sur les performances de la machine. On peut envisager d'étudier le système d'exploitation ou les applications, au moyen de programmes qui simulent le comportement de la machine avec ce système d'exploitation ou et avec ces applications. On peut alors espérer en déduire comment adapter le système d'exploitation et ou les applications, par exemple en jouant sur la répartition des adresses, la création de tables logicielles ou le séquencement des tâches. Cependant, il est difficile de prévoir tous les cas qui se produiront dans la marche effective de la machine.

Le document "The Dash Prototype: Logic Overhead and Performance", publié par Daniel Lenoski, James Laudon, Truman Joe, David Nakahira, Luis Stevens, Anoop Gupta, and John Hennessy, 8354 IEEE Transactions on Parallel and Distributed Systems, 4(1993) January, No. 1, New York, U.S. décrit une étude du temps système consommé par les différentes parties de l'architecture de tels systèmes. Il fait en particulier référence à la discrimination des temps système pour les accès en mémoire locale ou distante. Les résultats d'une telle étude sont donnés de manière globale.

Le document US 4 068 304 décrit un système de contrôle de la gestion d'accès à des mémoires hiérarchisées. Ce système utilise des compteurs distincts pour décompter et gérer les accès et les absences d'accès aux différents niveaux de mémorisation les plus élevés.

Un premier objet de l'invention telle que définie par la revendication 1 est une machine avec mémoire à accès non uniforme, constituée de plusieurs modules, chaque module comprenant un organe avec une table pour gérer des accès locaux à une partie de mémoire locale au module et une table pour gérer des accès à une partie de mémoire distante au module, au moyen d'un bus système, caractérisée en ce que la machine comprend:
- un compteur d'accès à la partie de mémoire locale honorés sans nécessiter de transaction avec un module distant;
- un compteur d'accès à la partie de mémoire locale manqués nécessitant au moins une transaction avec un module distant;
- un compteur d'accès à la partie de mémoire distante honorés sans nécessiter de transaction avec un module distant;
- un compteur d'accès à la partie de mémoire distante manqués nécessitant au moins une transaction avec un module distant.

Ceci permet de mesurer en temps réel la répartition des accès en mémoire rapides, qui ne nécessitent pas de transaction pour assurer une cohérence antémémoire, et des accès en mémoire lents, qui nécessitent au moins une transaction pour assurer une cohérence antémémoire . Un problème peut toutefois se poser si des ressources nécessaires à l'incrémentation de ces compteurs détériorent les performances de la machine.
Un second objet de l'invention concerne une machine avec mémoire à accès non uniforme, caractérisée en ce que les quatre compteurs sont situés matériellement dans ledit organe. Ainsi, l'incrémentation des compteurs ne nécessite aucune ressource supplémentaire sur le bus système.

Un procédé tel que définie par la revendication 7, pour calculer le temps moyen d'accès en mémoire consiste alors
- à multiplier le contenu:
   - du compteur d'accès à la partie de mémoire locale honorés par le temps moyen d'un accès à la partie de mémoire locale honoré,
   - du compteur d'accès à la partie de mémoire locale manqués par le temps moyen d'un accès à la partie de mémoire locale manqué,
   - du compteur d'accès à la partie de mémoire distante honorés par le temps moyen d'un accès à la partie de mémoire distante honoré,
   - du compteur d'accès à la partie de mémoire distante manqués par le temps moyen d'un accès à la partie de mémoire distante manqué,
- à sommer les quatre résultats ainsi obtenus,
- et à diviser cette somme par la somme des contenus des quatre compteurs d'accès.

On peut envisager de déterminer le temps moyen de chaque type d'accès à l'aide d'un analyseur de bus mis en oeuvre lors d'essais de la machine. Les temps moyens ainsi déterminés sont ensuite fournis comme paramètres caractéristiques avec la machine. Les temps d'accès honorés sans transaction avec un module distant, que ce soit à la partie de mémoire locale ou à la partie de mémoire distante, sont pratiquement constants car ils ne dépendent que de l'encombrement du bus local au module. La moyenne de ces temps d'accès, calculée a priori au moyen d'un analyseur de bus standard, est donc représentative du comportement ultérieur de la machine en exploitation, avec une fidélité acceptable. Cependant, les accès manqués, accompagnés de transactions avec les modules distants, induisent des latences dépendantes des latences des transactions elles-mêmes. Si, dans l'exploitation ultérieure de la machine, le protocole de cohérence d'antémémoire est fortement sollicité, au point d'encombrer les liaisons entre modules, les temps d'accès peuvent varier de façon sensible. Les temps moyens d'accès manqués, déterminés à priori, risquent de ne plus être représentatifs des temps moyens d'accès effectifs avec une fidélité satisfaisante. Une solution est d'appliquer des coefficients de pondération correcteurs sur temps moyens d'accès manqués, fonction de l'exploitation effective de la machine. Les temps moyens d'accès manqués sont par exemple fonction du nombre d'accès manqués, connu par les compteurs d'accès manqués. Il est alors préférable de modéliser a priori, l'évolution de ces temps moyens d'accès manqués avec le nombre de transactions.

Un avantage supplémentaire est procuré si la machine avec mémoire à accès non uniforme comprend:
- un compteur pour cumuler des latences d'accès à la partie de mémoire locale qui nécessitent une transaction avec un module distant;
- un compteur pour cumuler des latences d'accès à la partie de mémoire distante qui nécessitent une transaction avec un module distant.

Ces deux compteurs permettent d'obtenir des temps moyens d'accès accompagnés de transactions, effectifs pendant toute exploitation de la machine, sans se préoccuper a priori de sollicitations intempestives du protocole de cohérence de cache. Il est alors possible de mettre en oeuvre un procédé selon la revendication 8 pour calculer le temps moyen d'accès en mémoire qui consiste
- à multiplier le contenu:
   - du compteur d'accès à la partie de mémoire locale honorés par le temps moyen d'un accès à la partie de mémoire locale honoré,
   - du compteur d'accès à la partie de mémoire distante honorés par le temps moyen d'un accès à la partie de mémoire distante honoré,
- à sommer les deux résultats ainsi obtenus avec les contenus du compteur pour cumuler des latences d'accès à la partie de mémoire locale qui nécessitent une transaction avec un module distant et du compteur pour cumuler des latences d'accès à la partie de mémoire distantes qui nécessitent une transaction avec un module distant,
- et à diviser cette somme par la somme des contenus des quatre compteurs.

L'invention sera mieux comprise à l'aide de la description d'un exemple de réalisation, en référence aux figures
La figure 1 présente une architecture de machine à quatre modules.
La figure 2 présente certains détails de l'organe précédemment cité, situé dans un module considéré local.
La figure 3 présente certains détails de l'organe précédemment cité, situé dans un module considéré distant.
Les figures 4 et 5 présentent d'autres détail du dit organe pour mettre en oeuvre l'invention.

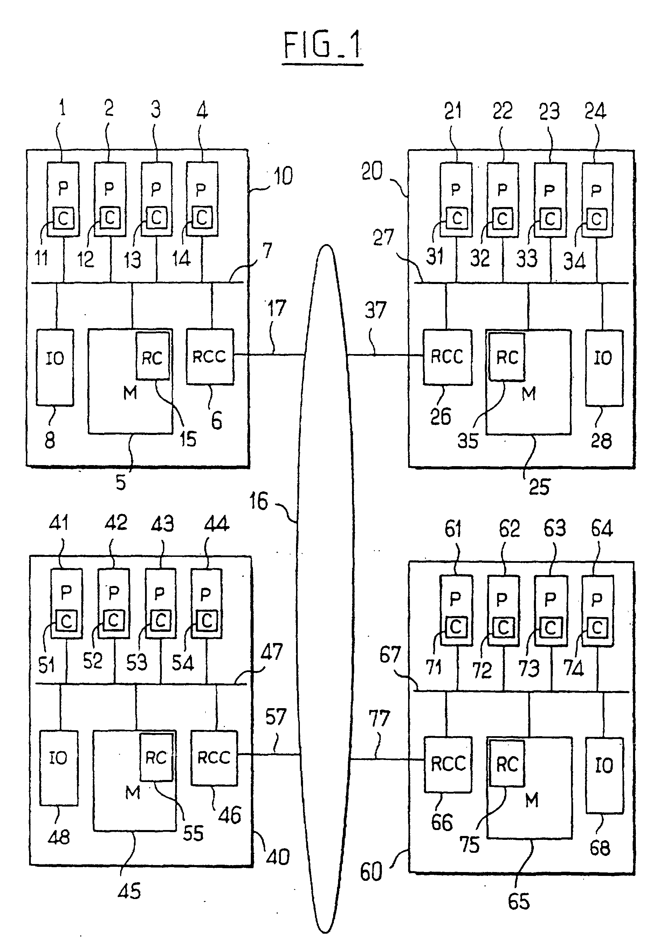

La figure 1 présente un exemple d'architecture de machine à accès de mémoire non uniforme constituée de quatre modules 10, 20, 40 et 60 interconnectés au moyen d'un anneau 16. La description qui suit en référence à la figure 1 reste valable pour un nombre quelconque de modules supérieur ou égal à deux. La connexion entre les modules peut être réalisée au moyen d'un ou plusieurs anneaux commutés ou par tout autre type de connexions tels que les interconnexions en grilles, en hypercube ou par autocommutateur (crossbar en anglais) pour n'en citer que quelques-uns parmi les plus connus. L'interconnexion des modules permet de faire des transactions entre modules qui utilisent le protocole de cohérence de mémoire.

Le module 10 comprend quatre processeurs 1 à 4, une mémoire 5 et un organe 6 de connexion aux autres modules par l'anneau 16. Les différents éléments 1 à 6 sont reliés entre eux par un bus système 7 dans le module 10. Le module 20 comprend quatre processeurs 21 à 24, une mémoire 25 et un organe 26 de connexion aux autres modules par l'anneau 16. Les différents éléments 21 à 26 sont reliés entre eux par un bus système 27 dans le module 20. Le module 40 comprend quatre processeurs 41 à 44, une mémoire 45 et un organe 46 de connexion aux autres modules par l'anneau 16. Les différents éléments 41 à 46 sont reliés entre eux par un bus système 47 dans le module 40. Le module 60 comprend quatre processeurs 61 à 64, une mémoire 65 et un organe 66 de connexion aux autres modules par l'anneau 16. Les différents éléments 61 à 66 sont reliés entre eux par un bus système 67 dans le module 60. L'organe 6, respectivement 26, 46, 66 est connecté sur l'anneau 16 au moyen d'une liaison 17, respectivement 37, 57, 77.

Chaque processeur 1 à 4, 21 à 24, 41 à 44, 61 à 64, possède respectivement une antémémoire privée, interne et ou externe, 11 à 14, 31 à 34, 51 à 54, 71 à 74. De plus, le module 10 comprend une antémémoire 15 d'accès à distance, nommée RC, le module 20 comprend une antémémoire 35 d'accès à distance, nommée RC, le module 40 comprend une antémémoire 55 d'accès à distance, nommée RC, le module 60 comprend une antémémoire 75 d'accès à distance, nommée RC. De façon à pouvoir paramétrer la taille de l'antémémoire 15, 35, 55 et ou 75, il est avantageux de placer physiquement celle-ci dans une zone réservée respectivement de la mémoire 5, 25, 45, 65, tel que le montre la figure 1. Dans ce cas, la suite de la description considère la mémoire 5', respectivement 25', 45', 65' comme constituée de blocs de données de la mémoire 5, respectivement 25, 45, 65 ne comprenant pas de blocs de données de l'antémémoire 15, respectivement 35, 55, 75. Dans le cas où les antémémoires 15, 35, 55, 75 sont réalisées au moyen de composants physiques différents de ceux des mémoires 5, 25, 45, 65, il faut comprendre les références 5', 25', 45', 65', identiques aux références 5, 25, 45, 65.

Chaque processeur 1 à 4, 21 à 24, 41 à 44 et 61 à 64 accède à des blocs de données contenus dans les mémoires 5', 25', 45', 65' au moyen d'adresses logiques d'un seul espace d'adressage; sans distinguer si les mémoires 5', 25', 45', 65' sont locales, appartenant au même module que le processeur, ou distantes, appartenant à un autre module que le processeur. Dans le module 10, c'est l'organe 6 qui distingue si l'adresse logique correspond à une adresse physique locale de bloc résidant dans la mémoire 5', ou si l'adresse logique correspond à une adresse physique distante de bloc résidant dans l'un des modules 20, 40, 60, par exemple au moyen des bits de poids fort de l'adresse logique qui indiquent le module où se situe physiquement la mémoire adressée, les bits de poids faible indiquant alors l'adresse physique à l'intérieur du module de résidence. Dans le module 20, c'est l'organe 26 qui distingue si l'adresse logique correspond à une adresse physique locale de bloc résidant dans la mémoire 25', ou si l'adresse logique correspond à une adresse physique distante de bloc résidant dans l'un des modules 40, 60, 10 par exemple au moyen des bits de poids fort de l'adresse logique qui indiquent le module où se situe physiquement la mémoire adressée, les bits de poids faible indiquant alors l'adresse physique à l'intérieur du module de résidence, et ainsi de suite pour les autres modules. Les bits de poids fort précédemment mentionnés constituent un champ A4 de l'adresse logique. Les blocs de données ainsi accédés constituent un ensemble SM de mémoire partagée par tous les processeurs.

L'exemple qui suit, en référence au processeur 1, reste valable pour chacun des autres processeurs 2 à 4 en référence au module 10 ainsi que 21 à 24 en référence au module 20, 41 à 44 en référence au module 40 et 61 à 64 en référence au module 60.

Le processeur 1 traite un mot contenu dans un bloc B1 de données de l'ensemble SM au moyen de son antémémoire privée 11 suivant un mécanisme connu d'antémémoire, tel que celui à correspondance directe, à correspondance associative ou associative par ensemble de blocs, sans qu'il soit nécessaire ici de rappeler ces différents mécanismes.

Rappelons simplement qu'une antémémoire comprend essentiellement une mémoire à accès rapide et une table de correspondance non représentées sur les figures. Dans le cas d'un mécanisme à correspondance directe, on distingue essentiellement trois champs dans l'adresse logique d'un mot par ordre décroissant du poids des bits. Un premier champ A1 appelé étiquette, un deuxième champ A2 appelé indexe et un troisième champ A3 appelé adresse du mot dans le bloc de données contenant ce mot. Le premier et le deuxième champ constituent habituellement l'adresse logique du bloc B1. L'indexe A1 pointe sur une ligne d'une table de correspondance qui contient essentiellement deux valeurs. La première valeur est l'étiquette A1' d'un bloc B2 dont une image physique est directement adressée dans la mémoire à accès rapide par ce même indexe. La deuxième valeur est un code de statut qui indique si le bloc B2 est détenu en exclusivité par le processeur, partagé par un autre processeur et dans ce cas si son contenu est valide ou s'il a été modifié par cet autre processeur.

Si l'étiquette A1 du bloc B1 est égale à l'étiquette A1' du bloc B2 et si le code de statut indique une exclusivité ou un contenu valide, le bloc B2 n'est autre que le bloc B1, contenu physiquement dans la mémoire à accès rapide et le processeur peut directement traiter les mots contenus dans ce bloc en les adressant physiquement dans la mémoire à accès rapide au moyen des deuxième et troisième champs de l'adresse logique. Si le code de statut indique un partage, le mécanisme d'antémémoire envoie sur le bus 7 un signal S1 pour indiquer une modification à l'adresse du bloc B1, de façon à modifier le code de statut de ce bloc dans les antémémoires qui le partagent.

Si l'étiquette A1 du bloc B1 est différente de l'étiquette A1' du bloc B2 ou si le code de statut indique un partage et un contenu modifié, le processeur ne peut pas directement traiter les mots contenus dans ce bloc en les adressant physiquement dans la mémoire à accès rapide au moyen des deuxième et troisième champs de l'adresse logique. Si le code de statut indique une exclusivité, le mécanisme d'antémémoire envoie une requête Q2 d'écriture du bloc B2 dans la mémoire partagée de façon à libérer une place dans l'antémémoire à l'adresse physique indiquée par l'indexe A2 puis envoie une requête Q1 de lecture du bloc B1 dans la mémoire partagée de façon à charger le bloc B1 dans l'antémémoire à l'adresse physique indiquée par l'indexe A2. Sinon, le mécanisme d'antémémoire envoie une requête Q1 de lecture du bloc B1 dans la mémoire partagée de façon à charger le bloc B1 dans l'antémémoire à l'adresse physique indiquée par l'indexe A2.

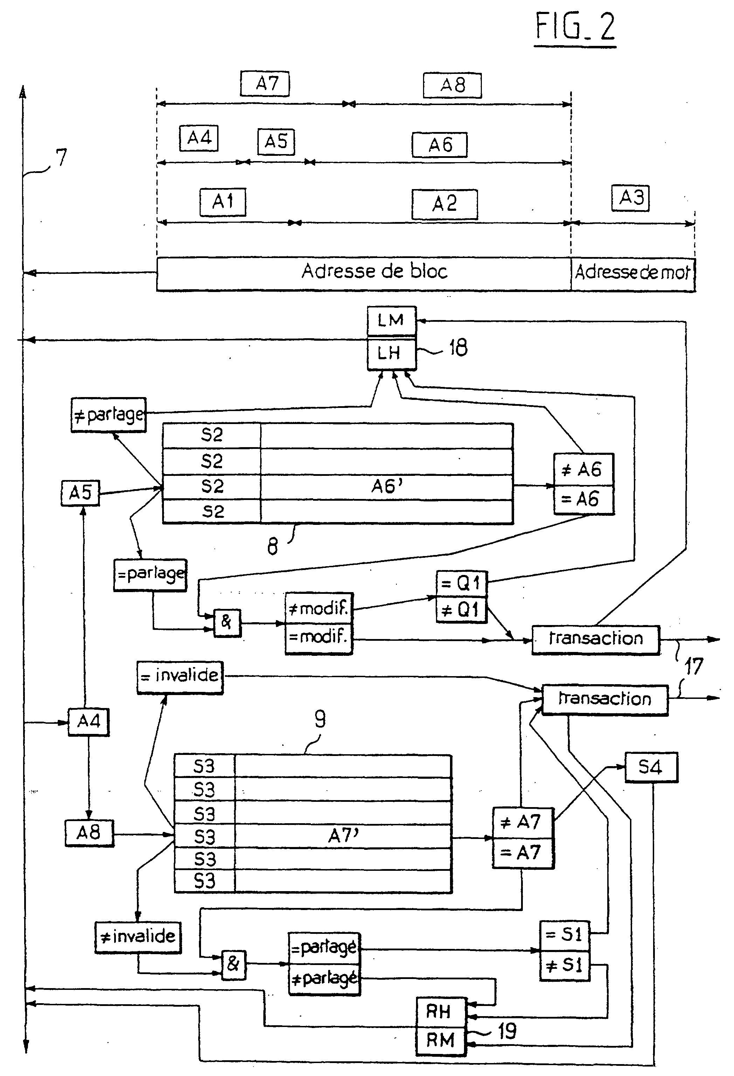

La figure 2 présente un premier niveau de détails de l'organe 6, avec les éléments matériels et logiques mis en oeuvre lorsqu'une adresse de bloc constituée des champs A1 et A2, circule sur le bus 7 en étant liée à un signal S1, une requête Q1 ou Q2. L'organe 6, nommé RCC, comprend une table 8, nommée LMD, une table 9, nommée RCT, un registre 18 et un registre 19. L'adresse du bloc est également partagée en trois champs A4 à A6 ou en deux champs A7 et A8. Le champ A4 est constitué des bits de poids plus fort que ceux du champ A5 et le champ A6 est constitué des bits de poids plus faible que ceux du champ A5. Le champ A8 est constitué des bits de poids faible et le champ A7 est constitué des bits de poids fort en quantité supérieure à celle des bits du champ A4 de façon à recouvrir le champ A4. d'un nombre de bits de poids fort. L'utilité des champs A4 à A8 apparaîtra dans la suite de la description. La logique d'écriture dans les registres 18 et 19 en fonction des valeurs des champs A4 à A8, est représentée au moyen de cellules dans lesquelles des fonctions logiques sont traitées. Chaque paire de cellules contenant le même terme, précédé du signe = dans l'une et du signe ≠ dans l'autre, représente un comparateur dont le résultat active un étage logique en aval. Dans chacun des registres 18 et 19 est écrit l'un de deux états possibles d'un signal, représentés symboliquement par une paire de cellules. La logique décrite peut être réalisée au moyen d'un microprocesseur spécialement dédié à l'organe 6. En réalisant cette logique au moyen de circuits matériels, on augmente sa vitesse d'exécution. Les explications en référence à la figure 2 pour l'organe 6 considéré local au module 10 et distant aux modules 20, 40, 60, restent valables pour les organes 26, 46, 66, en remplaçant les références par permutation circulaire et en particulier, en remplaçant suivant la même permutation circulaire 8 par 28, 48 ou 68, et 9 par 29, 49 ou 69 suivant le module considéré.

Lorsque l'organe 6 voit passer sur le bus 7, le signal S1, la requête Q1 ou la requête Q2, il traite le bloc concerné par un mécanisme antémémoire à l'aide de sa table 8 si les bits de poids fort contenus dans le champ A4 de l'adresse logique indiquent que le bloc concerné réside physiquement dans la mémoire 5', locaux au module 10, et à l'aide de sa table 9 si les bits de poids fort de l'étiquette indiquent que le bloc concerné réside physiquement dans l'un des modules 20, 40 ou 60 distant.

La table 8 est indexée par m bits constituant un champ A5 de l'adresse logique succédant aux bits de poids fort de l'étiquette. La valeur du nombre m détermine directement la taille de la table 8 dont le nombre de lignes est alors égal à 2^{m}. Chaque ligne de la table 8 contient les bits de poids faible constituant un champ A6 de l'adresse logique d'un bloc partagé avec un ou plusieurs modules distants et un code de statut S2. Le code de statut S2 est par exemple un multiplet qui contient au moins autant de bits que la machine contient de modules. A chaque module distant du module 10 dans lequel réside le bloc référencé par les champs A5 et A6, est attribué un bit pour indiquer la présence d'un partage de ce bloc avec le module distant. Un bit indique si le bloc est modifié par un module distant. A un instant donné, un seul module détient la copie modifiée qui constitue une version la plus à jour du bloc. C'est à dire que si le code de statut S2 indique une modification, il n'y a plus qu'un seul bit de présence qui indique le partage de ce bloc avec un module distant, c'est le bit attribué au module qui contient la version la plus à jour. Les copies du bloc dans les autres modules sont invalidées. Les bits de poids faible de l'adresse logique d'un bloc sont ici les bits qui succèdent aux m bits précédemment mentionnés, de sorte que la concaténation des champs A4, A5 et A6 recouvre la concaténation des champs A1 et A2. Les champs A5 et A6 permettent d'adresser physiquement le bloc dans la mémoire locale constituée par la mémoire 5'.

Si la ligne indexée par les m bits du champ A5 contient une valeur d'adresse différente de celle du bloc traité, cela signifie qu'aucun autre module que le module 10 n'y accède. Le traitement du bloc reste alors local au module 10 et il n'est pas nécessaire de le répertorier dans la table 8 car sa mise à jour dans la mémoire 5' et éventuellement dans les antémémoires privées 11 à 14 suffit. L'organe 6 génère un signal LH de succès local pour indiquer un accès local honoré (local hit en anglais) sans transaction avec un module distant. Le signal LH est écrit dans le registre 18. Il en est de même si aucun bit du code de statut S2 n'indique de partage avec un module distant.

Si la ligne de la table 8, indexée par les m bits du champ A5, contient une valeur d'adresse A6 égale à celle du bloc traité et qu'au moins un bit du code de statut indique un partage, cela signifie qu'un autre module que le module 10, par exemple le module 20, y a accédé précédemment. Le traitement du bloc dépend alors de son accès précédent par le module 20 distant et du traitement lié à ce bloc. Si le code de statut S2 indique que le bloc est actuellement d'usage partagé, l'organe 6 détermine s'il est nécessaire de faire une transaction avec le module 20 distant.

Si le code de statut S2 indique que le bloc a été modifié par un module distant, une requête Q1 de lecture nécessite une transaction avec le module distant qui détient une copie valide du bloc pour rapatrier cette copie valide dans la mémoire physique résidente dans le module 10, l'organe 6 génère alors un signal LM d'échec local pour indiquer un accès en mémoire locale manqué (local miss en anglais) qui s'accompagnent d'au moins une transaction avec un module distant. Le signal LM est écrit dans le registre 18, puis l'organe 6 remet à jour le code S2 à un statut non modifié en fin de transaction.

Si le code de statut S2 n'indique pas que le bloc a été modifié par un module distant, une requête Q1 de lecture ne nécessite de transaction avec aucun module distant car le module 10 détient une copie valide du bloc, l'organe 6 génère alors un signal LH de succès local. Par contre, un signal S1 de modification ou une requête Q2 d'écriture du bloc nécessite une transaction avec chaque module distant pour lequel un bit du code S2 indique une présence, de façon à lui signaler que la copie du bloc qu'il détient, n'est pas valide, l'organe 6 génère alors un signal LM d'échec local.

La génération des signaux LH et LM a été expliqué ici avec un mécanisme antémémoire de réécriture (write back en anglais). Avec un mécanisme antémémoire d'écriture simultanée (write through en anglais), on comprendra que la requête Q1 ne nécessite pas de transaction car le module 10 détient une copie à jour du bloc, l'organe 6 générant alors un signal LH, et que la requête Q2 ou le signal S1 nécessite une transaction avec au moins un module 20 distant pour remettre la copie du bloc à jour dans ce module, l'organe 6 générant alors un signal LM.

La table 9 est indexée par n bits de poids faible de l'adresse logique qui constituent un champ A8. La valeur du nombre n détermine directement la taille de la table 9 dont le nombre de lignes est alors égal à 2ⁿ. Chaque ligne de la table 9 contient un code de statut S3 et le champ A7 de l'adresse logique qui référence une copie de bloc directement indexée dans l'antémémoire 15 par le champ A8. La taille de l'antémémoire 15 est donc de 2ⁿ blocs. Le code de statut S3 est par exemple constitué de deux bits pour coder trois états Inv, Sha, Mod, qui indiquent l'état d'un bloc référencé dans la table 9 par le champ A8. L'état Inv indique que le bloc référencé est invalide, c'est à dire que le bloc référencé a été modifié par un module distant 20, 40 ou 60. L'état Sha indique que le bloc référencé est partagé par au moins un module distant 20, 40, 60. L'état Mod indique que le bloc référencé a été modifié par le module 10 local et que sa copie dans l'antémémoire 15 est à jour.

Si la ligne indexée par les n bits du champ A8 contient une valeur de champ A7' égale à celle du bloc traité, cela signifie que le bloc résident dans un autre module que le module 10, par exemple dans le module 20, a été copié dans l'antémémoire 15 commune aux processeurs 1 à 4. La taille de l'antémémoire est dimensionnée pour contenir 2ⁿ blocs référencés dans la table 9. La taille de la table 9 étant paramétrable par choix de la valeur de n, il en est de même de la taille de l'antémémoire 15. Un moyen intéressant de permettre cette paramétrabilité est de retirer de la mémoire 5 une zone d'adressage réservée et de l'allouer à l'antémémoire 15. Ce moyen est alors dans chaque module distant 20, 40, 60 pour allouer une zone d'adressage réservé dans la mémoire 25, 45, 65 à une antémémoire 35, 55, 75. La taille des antémémoires 15, 35, 55, 75 étant faible devant celle des mémoires 5, 25, 45, 65, ce moyen ne diminue que faiblement la taille de la mémoire commune à tous les modules.

L'organe 6 considère alors le code de statut S3 du bloc référencé dans la table 9, c'est à dire du bloc traité par le signal S1 ou une requête Q1, Q2. Si le code de statut S3 indique que le bloc est invalide, l'organe 6 génère les mêmes transactions et les mêmes signaux que si la ligne indexée par les n bits du champ A8 contient une valeur de champ A7' différente de celle du bloc traité, tel qu'expliqué plus loin dans la description.

Si le code de statut S3 indique que le bloc n'est pas partagé par un autre module, aucune transaction avec un module distant n'est nécessaire et l'organe 6 génère un signal RH de succès distant pour indiquer un accès en mémoire distante honoré (remote hit en anglais) sans transaction avec un module distant.

Si le code de statut dans la table 9 indique que le bloc est actuellement d'usage partagé, l'organe 6 détermine s'il est nécessaire de faire une transaction avec le module 20 distant. Pour le signal S1, une transaction est nécessaire pour écrire dans le code de statut S2 du module 20, dans lequel le bloc est résident que le bloc est modifié, et dans le code de statut S3 du module 40 ou 60 qui possède une copie du bloc dans son antémémoire 55, 75 que le bloc est invalide; l'organe 6 génère alors un signal RM d'échec distant pour indiquer un accès distant manqué (remote miss en anglais) pour lequel au moins une transaction avec un module distant est déclenchée. L'organe 6 déclare dans son code de statut S3 que le bloc modifié. Pour la requête Q1 de lecture; si le code de statut S3 dans la table 9 indique que le contenu du bloc dans le module 10 est valide, aucune transaction n'est nécessaire et l'organe 6 génère alors un signal RH de succès distant; si le code de statut dans la table 9 indique que le contenu du bloc dans le module 10 est invalide, une transaction est nécessaire pour mettre à jour le contenu du bloc dans le module 10 et l'organe 6 génère alors un signal RM d'échec distant et déclare en fin de transaction que le bloc est valide dans son code de statut S3. Pour la requête Q2 d'écriture dans la mémoire, distante au module 10, aucune transaction n'est nécessaire et l'organe 6 génère un signal RH de succès distant. La génération des signaux RH et RM a été expliqué ici avec un mécanisme antémémoire de réécriture. Avec un mécanisme antémémoire d'écriture simultanée (write through en anglais), il suffit de modifier la logique décrite de sorte que le signal S1 et la requête Q2 nécessitent une transaction avec le module 20, 40, 60 distant pour y remettre le bloc à jour, le module 6 générant alors un signal RM, et de sorte que la requête Q1 ne nécessite pas de transaction car le contenu du bloc est systématiquement remis à jour.

Si la ligne indexée par les n bits contient une valeur d'adresse différente de celle du bloc traité, cela signifie que le bloc adressé logiquement dans l'antémémoire 15 par l'indexation de la table 9, est différent du bloc traité. Il est alors nécessaire de remplacer le bloc référencé dans la table 9 par le bloc traité. L'organe 6 génère alors un signal RM. L'organe 6 génère aussi dans ce cas un signal S4 pour indiquer un remplacement dans l'antémémoire 15, du bloc répertorié par le bloc traité. Le signal S4 est émis sur le bus 7 pour invalider, dans les antémémoires privées 11 à 14, le bloc répertorié dans l'antémémoire 15 car la table 9 ne pourra plus assurer sa cohérence. Le module 6 effectue ensuite une remise à jour de la table 9 au moyen d'une transaction avec les modules 20, 40 et 60 distants pour rapatrier le bloc traité à un emplacement physique adressé logiquement dans l'antémémoire 15 par l'indexation de la table 9. La transaction consiste essentiellement à émettre une requête de lecture à destination du module distant 20, 40 ou 60 de résidence du bloc. Pour simplifier la description, nous supposons par exemple que le module de résidence du bloc est le module 20.

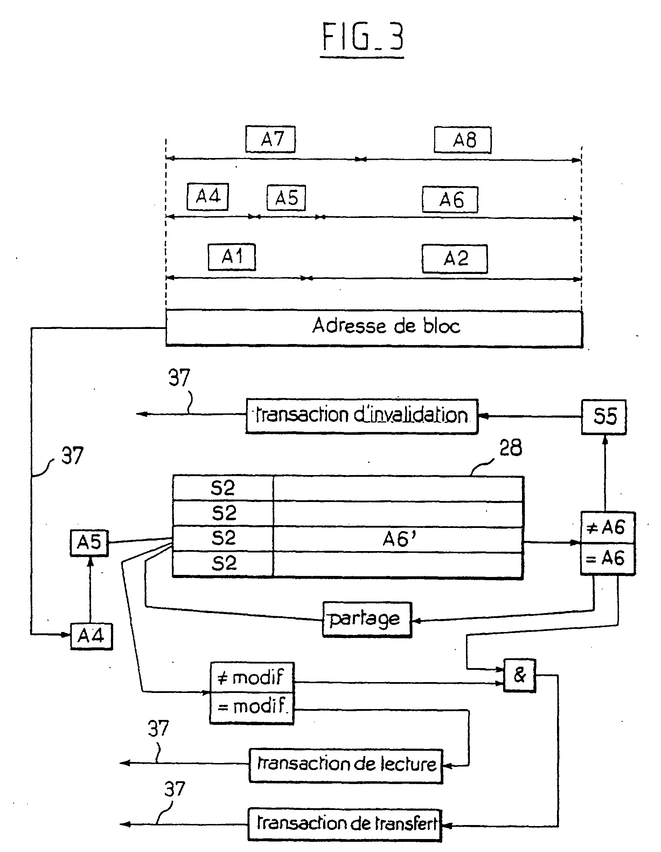

La figure 3 présente un deuxième niveau de détails de l'organe 6, 26, 46, 66, avec les éléments matériels et logiques mis en oeuvre lorsqu'une adresse de bloc constituée des champs A1 et A2, arrive dans le module de résidence de ce bloc, en provenance d'autres modules par la liaison 17, 37, 57, 77. Les remarques faites dans le préambule d'introduction à la figure 2 restent valables pour la figure 3. En particulier les références mises sur la figure 3 sont celles de l'organe 26 pour faciliter la suite de la description.

Si le bloc traité est répertorié dans la table 28, son code de statut S2 est mis à jour pour indiquer que le bloc est partagé par le module 10. Si, à la ligne de la table 28 répertoriant le bloc traité, le code de statut S2 indique que le bloc n'est modifié par aucun autre module 40, 60, l'organe 26 transmet une copie du bloc à l'organe 6. Cette copie est obtenue par lecture dans la mémoire 25 ou dans l'une des antémémoires 31 à 34. Si le code de statut indique que le bloc est modifié, l'organe 26 émet une requête de lecture vers celui des modules 40, 60 qui possède la version la plus à jour du bloc. L'organe 46, 66 qui possède la copie la plus à jour, transmet la copie du bloc à l'organe 6 du module 10 et à l'organe 26 du module 20. L'organe 26 remet à jour sa mémoire locale 25', et son code S2 au statut partagé. L'organe 6 répertorie le bloc dans la table 9 avec un code de statut partagé et non modifié et écrit le bloc dans l'antémémoire 15. Ensuite, l'organe 6 émet un acquittement vers l'organe 26 qui ajoute dans son code de statut S2 le partage avec le module 10.

Si le bloc traité n'est pas répertorié dans la table 28, l'organe 26 génère un signal S5 pour indiquer que le bloc répertorié sera remplacé par le bloc traité. Si le code de statut S2 du bloc répertorié indique que celui-ci a été modifié par un module 10, 40 ou 60, l'organe 26 émet une requête de lecture vers celui des modules 10, 40, 60 qui détient la version la plus à jour du bloc. L'organe 6, 46, 66 dont le code S3 du bloc référencé indique que sa copie du bloc n'est pas invalide, transmet une copie du bloc à l'organe 26 du module 20 pour remettre à jour sa mémoire locale 25'. Le signal S5 est émis vers le ou les organes 6, 46, 66 qui référencent le bloc à une ligne de leur table 8, 48, 68, de façon à ce que chacun mette à jour son code S3 au statut invalide. Ensuite, l'organe 26 répertorie le bloc traité dans sa table 28 avec un code de statut S2 indiquant que le bloc est partagé avec le module 10, non modifié. Enfin, l'organe 26 transmet le contenu du bloc traité vers l'organe 6 qui répertorie le bloc dans la table 9 avec un code de statut non invalidé, partagé et non modifié et écrit le bloc dans l'antémémoire 15. Si le code de statut S2 du bloc répertorié dans la table 28, n'indique pas que celui-ci a été modifié, le signal S5 est émis vers le ou les organes 6, 46, 66 qui référencent le bloc à une ligne de leur table 8, 48, 68, de façon à ce que chacun mette à jour son code S3 au statut invalide. Ensuite, l'organe 26 répertorie le bloc traité dans sa table 28 avec un code de statut S2 indiquant que le bloc est partagé avec le module 10, non modifié. Enfin, l'organe 26 transmet le contenu du bloc traité vers l'organe 6 qui répertorie le bloc dans la table 9 avec un code de statut non invalidé, partagé et non modifié et écrit le bloc dans l'antémémoire 15.

Les explications qui précèdent s'appuient sur un mécanisme antémémoire à correspondance directe. La mise en oeuvre de l'enseignement ainsi procuré ne devrait pas poser de difficulté insurmontable à l'homme du métier pour utiliser d'autres mécanismes antémémoire connus tels que ceux à correspondance associative ou à correspondance associative par ensemble blocs, dans tout ou partie des antémémoires privées 11 à 14, 31 à 34, 41 à 44, 61 à 64 et des tables 8, 9, 28, 29, 48, 49, 68, 69.

En particulier, il est intéressant d'utiliser dans les tables 8, 28, 48, 68, une correspondance associative par ensemble de blocs, par exemple par ensemble de quatre blocs. En effet, un remplacement de ligne dans la table 9, respectivement 29, induit fréquemment un remplacement de ligne dans la table 28, respectivement 8.

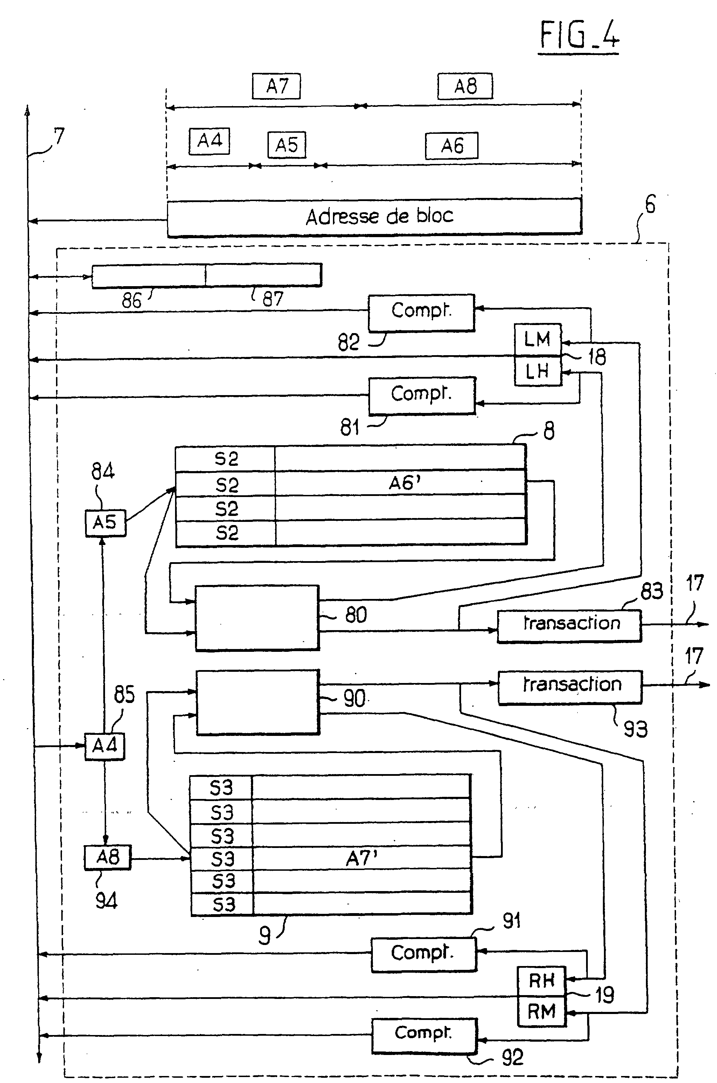

La figure 4 présente des détails supplémentaires de l'organe 6. Les organes 26, 46, 66 sont identiques. Le découpage d'une adresse de bloc circulant sur le bus 7, n'est ici représenté que par les champs A4 à A8 car nous avons vu précédemment que les champs A1 et A2 étaient plus particulièrement utile pour le niveau d'antémémoires privées 11 à 14. Un filtre 85 aiguille l'adresse du bloc vers la table 8 si le champ A4 concerne une adresse de bloc résidant dans le module 10 ou vers la table 9 si le champ A4 concerne une adresse de bloc résidant dans un module 20, 40, 60, distant du module 10. Un registre d'index 84 pointe sur une entrée de la table 8 adressée par le champ A5 de l'adresse de bloc. Un registre d'index 94 pointe sur une entrée de la table 9 adressée par le champ A8 de l'adresse de bloc.

Si le filtre 85 aiguille l'adresse du bloc vers la table 8, un élément de logique combinatoire 80 génère un signal LH ou un signal LM et une transaction à distance en fonction des valeurs de code de statut et de champ A6' mémorisés dans la table 8, à la ligne pointée par le registre d'index 84. L'élément 80 regroupe par exemple les différents comparateurs et portes logiques de la figure 2 en liaison avec la table 8. Chaque transaction à distance générée concomitamment au signal LM, est écrite dans un registre tampon 83 pour être émise sous forme de requête sur la liaison 17 en attente d'une réponse par la même liaison 17. Une écriture du signal LH, respectivement LM, dans le registre 18, incrémente un compteur 81, respectivement 82. Le contenu des compteurs 81 et 82 est accessible sur le bus 7, par exemple en lecture de type entrée-sortie.

Si le filtre 85 aiguille l'adresse du bloc vers la table 9, un élément de logique combinatoire 90 génère un signal RH ou un signal RM et une transaction à distance en fonction des valeurs de code de statut et de champ A7' mémorisés dans la table 9, à la ligne pointée par le registre d'index 94. L'élément 90 regroupe par exemple les différents comparateurs et portes logiques de la figure 2 en liaison avec la table 9. Chaque transaction à distance générée concomitamment au signal RM, est écrite dans un registre tampon 93 pour être émise sous forme de requête sur la liaison 17 en attente d'une réponse par la même liaison 17. Une écriture du signal RH, respectivement RM, dans le registre 19, incrémente un compteur 91, respectivement 92. Le contenu des compteurs 91 et 92 est accessible sur le bus 7, par exemple en lecture de type entrée-sortie.

Chacun des compteurs 81, 82, 91, 92 est prévu pour envoyer sur le bus 7, une interruption en cas de débordement. On distingue encore sur la figure 4, un registre de contrôle 86 et un registre d'état 87. Le registre 86 est accessible sur le bus 7 en lecture et en écriture. Le registre 87 est accessible sur le bus 7 en lecture et remis systématiquement à zéro par une lecture de son contenu.

Le registre 87 contient, pour chaque compteur 81, 82, 91, 92, un bit dont un état logique déterminé signale un débordement du compteur auquel est affecté ce bit.

Le registre 86 contient des bits pour contrôler les compteurs 81, 82, 91, 92, au moyen d'une logique combinatoire non représentée pour ne pas surcharger inutilement la figure. Un premier bit est prévu pour désactiver inconditionnellement les compteurs de façon à ce qu'un état logique du bit fasse que les contenus de compteurs ne puissent être modifiés par écriture dans les registres 18 et 19 et à ce que l'état logique complémentaire du bit fasse que les contenus de compteurs puissent être modifiés par écriture dans les registres 18 et 19. Un deuxième bit est prévu pour désactiver conditionnellement les compteurs de façon à ce qu'un état logique du bit fasse que les contenus de compteurs ne puissent être modifiés par écriture dans les registres 18 et 19 suite à un débordement signalé par un bit du registre 87 et à ce que l'état logique complémentaire du bit fasse que les contenus de compteurs puissent être modifiés par écriture dans les registres 18 et 19, indépendamment du contenu du registre 87. Un troisième bit est prévu pour désactiver l'interruption en cas de débordement mentionnée précédemment, de façon à ce qu'un état logique du bit fasse que l'interruption soit active et à ce que l'état logique complémentaire du bit fasse que l'interruption soit inactive. Un quatrième bit est prévu pour remettre à zéro le contenu des compteurs 81, 82, 91, 92. On peut prévoir un quatrième bit commun à tous les compteurs ou autant de quatrièmes bits qu'il existe de compteurs, chaque quatrième bit agissant alors sur le compteur auquel il est affecté.

Il convient d'apprécier que la gestion des compteur, physiquement localisée dans l'organe 6, se fait sans perturber les accès mémoire par le bus 7 et la liaison 17, opérés par les processus exécutés par les processeurs 1 à 4, 21 à 24, 41 à 44, 61 à 64. Ainsi, le comptage des succès et des échecs d'accès à l'espace mémoire local et distant, ne génère-t-il pas lui-même de succès ou d'échecs antémémoires. De plus, en réalisant les accès par le bus 7, aux compteurs 81, 82, 91, 92 et aux registres 18, 19, 86 et 87 par des lectures et ou écritures de type entrée-sortie, on ne fait pas intervenir de mécanismes antémémoires liés aux tables 8 et 9. Les seuls processus susceptibles de perturber les mécanismes antémémoire sont les processus d'exploitation du contenu des compteurs 81, 82, 91, 92, utiles pour éditer des comptes-rendus sur les performances du système d'exploitation ou des applications exécutées par le machine, voire même utiles pour éventuellement déclencher des procédures d'optimisations en temps réel telles que par exemple des réalocations de mémoire. Cependant, ces processus peuvent être suffisamment insignifiants en regard des autres processus exécutés par la machine pour que les mesures qu'ils permettent d'obtenir, soient pratiquement identiques à celles obtenues en l'absence totale d'influence de ces processus de mesures, sur les mécanismes antémémoire.

L'architecture des registres 86 et 87 permet de créer différents types de processus de mesures mis en oeuvre par des programmes exécutés dans les processeurs 1 à 4. On peut citer ceux déclenchés par une interruption générée dans le registre 87, ou ceux déclenchés périodiquement en interagissant avec le registre 86. Un processus de mesure lit simultanément le contenu des quatre compteurs 81, 82, 91, 92 et traite les valeurs obtenues.

La somme des valeurs contenues dans les quatre compteurs 81, 82, 91, 92, donne un nombre N0 d'accès mémoire, par exemple entre deux débordement compteur ou à intervalles de temps régulier. Le rapport du contenu du compteur 81 au nombre d'accès mémoire donne un taux TL1 de réussite d'accès local. Le rapport du contenu du compteur 82 au nombre d'accès mémoire donne un taux TL2 d'échec d'accès local, c'est à dire d'accès aux bloc résidents dans la mémoire 5'. Le rapport du contenu du compteur 91 au nombre d'accès mémoire donne un taux TR1 de réussite d'accès distant. Le rapport du contenu du compteur 92 au nombre d'accès mémoire donne un taux TR2 d'échec d'accès distant, c'est à dire d'accès aux bloc résidents dans les mémoires 25', 45', 65'. La somme des valeurs contenues dans les registres 81 et 91 donne un nombre N1 d'accès honorés à la mémoire sans transaction à distance. La somme des valeurs contenues dans les registres 82 et 92 donne un nombre N2 d'accès manqués accompagnés de transactions à distance. Le rapport du nombre N1 au nombre N0 donne un taux TR3 de localité des accès mémoire. Le rapport du nombre N2 au nombre N0 donne un taux TR4 de distance des accès mémoire. Nous voyons sur ces quelques exemples la richesse d'exploitations possibles des contenus de compteurs 81, 82, 91, 92, procurées par la configuration matérielle de l'organe 6, à l'utilisateur de la machine, pour en augmenter les performances.

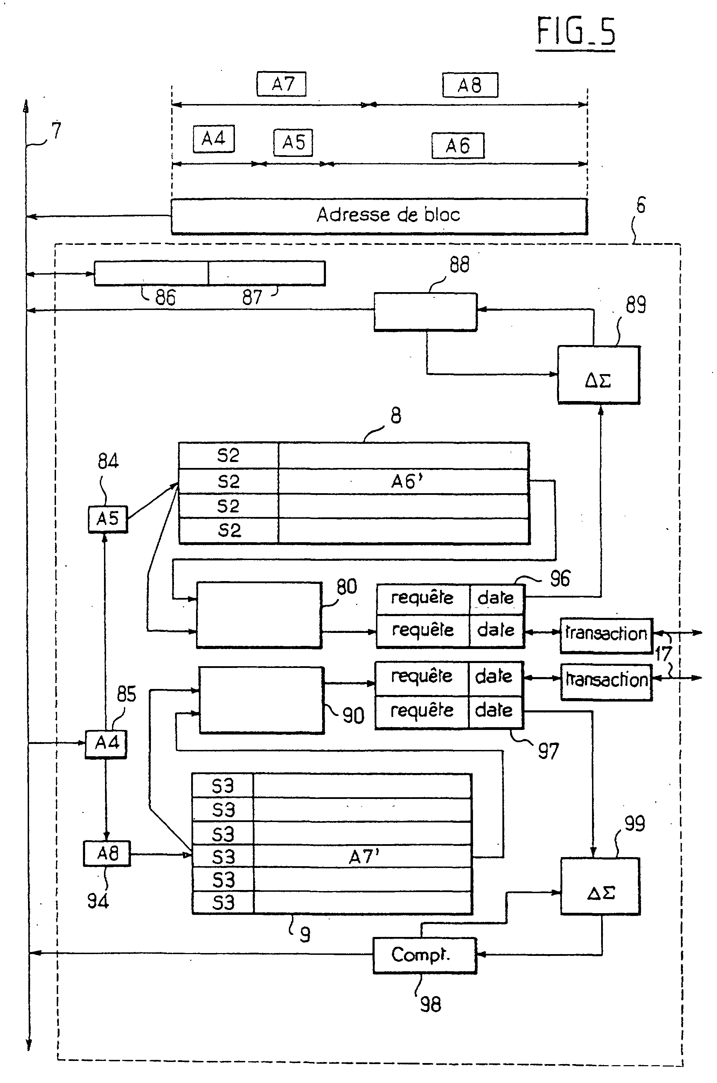

La figure 5 présente d'autres détails possibles de l'organe 6. Chaque fois que l'élément de logique combinatoire 80 génère un signal LM, la requête à l'origine du signal LM est mémorisée dans une pile 96 avec la date de prise en compte de cette requête dans l'organe 6 par le filtre 85, en attente de traitement pour satisfaire cette requête. Chaque fois que l'élément de logique combinatoire 90 génère un signal RM, la requête à l'origine du signal RM est mémorisée dans une pile 97 avec la date prise en compte de cette requête, en attente de traitement pour satisfaire cette requête. Nous avons vu précédemment que chaque signal LM et RM était accompagné d'une première transaction avec un module distant qui pouvait elle-mème déclencher d'autres transactions intermédiaires en cascade. Cette première transaction se termine lorsque l'organe 6 reçoit, par la liaison 17, une réponse qui lui permet d'achever le traitement de la requête à l'origine du signal LM ou RM. Le traitement d'une requête est achevée lorsque l'organe 6 transmet une copie valide de bloc sur le bus 7, suite à une requête de lecture, ou plus simplement un acquittement, suite à une requête d'écriture. A l'achèvement de traitement d'une requête mémorisée dans la pile 96, un soustracteur additionneur 89 soustrait la date de prise en compte de la requête à la date d'achèvement du traitement de la requête et ajoute la différence Δ obtenue au contenu Σ d'un registre 88. Le registre 88 se comporte comme un compteur du temps cumulé séparant la prise en compte d'une requête et l'achèvement de son traitement par l'organe 6. Le registre, encore appelé compteur 88 est accessible en lecture sur le bus 7. A l'achèvement de traitement d'une requête mémorisée dans la pile 97, un soustracteur additionneur 99 soustrait la date de prise en compte de la requête à la date d'achèvement du traitement de la requête ajoute la différence Δ obtenue au contenu Σ d'un registre 98. Le registre 98 se comporte comme un compteur du temps cumulé séparant la prise en compte d'une requête et l'achèvement de son traitement par l'organe 6. Le registre, encore appelé compteur 98 est accessible en lecture sur le bus 7.

Le registre 87 contient, pour chaque compteur 88, 98, un bit dont un état logique déterminé signale un débordement du compteur auquel est affecté ce bit. Les bits du registre 86 contrôlent les compteurs 88 et 98 de façon identique à celle décrite en référence à la figure 4 pour les compteurs 81, 82, 91, 92.

L'accès en lecture aux compteurs 88 et 98 permet à un processus exécuté dans le module 10 d'évaluer la latence des transactions avec des modules distants 20, 40, 60, concernant tant des accès à des blocs résidents dans le module 10 grâce au compteur 88 que des accès à des blocs résidents dans un module distant 20, 40, 60 grâce au compteur 98.

Les différents éléments de l'organe 6 décrits sont utiles pour calculer le temps moyen d'accès à la mémoire et constituent une aide au diagnostique de localité.

## Revendications

1. Machine informatique avec mémoire à accès non uniforme et à cohérence antémémoire, constituée de plusieurs modules (10,20,40,60) chaque module comprenant un organe (6,26,46,66) de connexion aux autres modules, l'organe (6) au moins comprenant une table (8) pour gérer des accès locaux à une partie de mémoire (5') locale au module (10) et une table (9) pour gérer des accès à une partie de mémoire (25',45',65') distante au module (10), lesdits accès se faisant au moyen d'un bus système (7), la machine comprenant pour chaque module:
- un compteur (81) d'accès à la partie mémoire (5') locale honorés sans nécessiter de transaction avec un module distant;
- un compteur (82) d'accès à la partie de mémoire (5') locale manqués nécessitant au moins une transaction avec un module distant;
- un compteur (91) d'accès à la partie de mémoire (25',45',65') distante honorés sans nécessiter de transaction avec un module distant;
- un compteur (92) d'accès à la partie de mémoire (25',45',65') distante manqués nécessitant au moins une transaction avec un module distant, lesdits quatre compteurs (81,82,91,92) étant accessibles sur le bus système (7) localement en mode entrée-sortie, ce qui permet de mesurer en temps réel la répartition des accès en mémoire rapide qui ne nécessitent pas de transaction pour assurer une cohérence antémémoire et des accès en mémoire lents, qui nécessitent au moins une transaction pour assurer une cohérence antémémoire.

2. Machine avec mémoire à accès non uniforme selon la revendication 1, **caractérisée en ce que** les quatre compteurs (81,82,91,92) sont situés matériellement dans l'organe (6).

3. Machine avec mémoire à accès non uniforme selon la revendication 1, **caractérisée en ce que** la machine comprend :
- un compteur (88) pour cumuler des latences d'accès à la partie de mémoire (5') locale qui nécessitent une transaction avec un module distant;
- un compteur (98) pour cumuler des latences d'accès à la partie de mémoire (25',45',65') distantes qui nécessitent une transaction avec un module distant.

4. Machine avec mémoire à accès non uniforme selon la revendication 4, **caractérisée en ce que** les deux compteurs (88,98) pour cumuler les latences d'accès sont situés matériellement dans l'organe (6).

5. Machine avec mémoire à accès non uniforme selon la revendication 3 ou 4, **caractérisée en ce que** les deux compteurs (88,98) pour cumuler les latences d'accès sont accessibles en lecture sur le bus système (7) en mode entrée-sortie.

6. Machine avec mémoire à accès non uniforme selon l'une des revendications 1 à 6, **caractérisée en ce que** l'organe (6) comprend un registre (86) de contrôle des compteurs (81,82,88,91,92,98) et un registre d'état (87) des compteurs (81,82,88,91,92,98), le registre (86) de contrôle étant accessible en écriture et en lecture sur le bus système (7) en mode entrée-sortie, le registre (87) de contrôle étant accessible en lecture sur le bus système (7) en mode entrée-sortie.

7. Procédé pour calculer en temps réel le temps moyen d'accès en mémoire dans une machine informatique avec mémoire à accès non uniforme et à cohérence antémémoire consistant :
- à accéder localement en lecture-écriture en mode entrée/sortie à un premier compteur (81) d'accès à une partie de mémoire locale (5) honorés, à un deuxième compteur (82) d'accès à la partie de mémoire locale (5) manqués, à un troisième compteur (91) d'accès à une partie de mémoire distante (25,45,65) honorés, à un quatrième compteur d'accès (92) à 1a partie de mémoire distante (25,45,65) manqués, en l'absence d'introduction de perturbation des accès mémoire,
- à multiplier le contenu des valeurs des premier (81), deuxième (82), troisième (91) et quatrième (92) compteurs d'accès respectivement par un temps moyen d'un accès à la partie de mémoire locale honoré, un temps moyen d'un accès à la partie de mémoire locale manqué, un temps moyen d'un accès à la partie de mémoire distante honoré, un temps moyen d'un accès, à la partie de mémoire distante manqué,
- à sommer les quatre résultats ainsi obtenus,
- et à diviser cette somme par la somme des contenus des quatre compteurs d'accès (81,82,91,92).

8. Procédé pour calculer en temps réel le temps moyen d'accès en mémoire dans une machine informatique avec mémoire à accès non uniforme et à cohérence antémémoire qui consiste:
- à accéder localement en lecture-écriture en mode entrée/sortie à un compteur (81) d'accès à une partie de mémoire locale (5) honorés et à un autre compteur (91) d'accès à la partie de mémoire distante (24,25,26) honorés, en l'absence d'introduction de perturbation d'accès mémoire,
- à multiplier le contenu des valeurs de ce compteur d'accès (81) et de cet autre compteur d'accès (91) respectivement par un temps moyen d'un accès à la partie de mémoire locale honoré et par le temps moyen d'un accès à la partie de mémoire distante honoré,
- à sommer les deux résultats ainsi obtenus avec les contenus d'un compteur (88) pour cumuler des latences d'accès à la partie de mémoire locale (5) qui nécessitent une transaction avec un module distant et d'un compteur (98) pour cumuler des latences d'accès à la partie de mémoire distante qui nécessitent une transaction avec un module distant (20,40,60),
- et à diviser cette somme par la somme des contenus des deux compteurs d'accès honorés (81,91) et de deux compteurs d'accès manqués (82,92).

## Patentansprüche

1. Maschine zur Informationsverarbeitung mit nichtuniformen Speicherzugriffen und zusammenhängenden Pufferspeichern bestehend aus mehreren Modulen (10, 20, 40, 60), wobei jedes Modul eine Verbindungseinheit (6, 26, 46, 66) zu den anderen Modulen beinhaltet, die Verbindungseinheit (6) wenigstens eine Tabelle (8) zur Verwaltung der lokalen Zugriffe auf einen Teil eines Speichers (5'), der sich lokal im Modul (10) befindet, und eine Tabelle (9) zur Verwaltung der Zugriffe auf einen Teil eines Speichers (25', 45' 65'), der entfernt vom Modul (10) angeordnet ist, aufweist, wobei die Zugriffe über ein Bussystem (7) erfolgen, und wobei die Maschine für jedes Modul folgendes enthält:
- einen Zähler (81) der erfolgreichen Zugriffe auf den Teil des lokalen Speichers (5'), welche keinen Datenaustausch mit einem entfernten Modul benötigen;
- einen Zähler (82) der nicht erfolgreichen Zugriffe auf den Teil des lokalen Speichers (5'), welche mindestens einen Datenaustausch mit einem entfernten Modul benötigen;
- einen Zähler (91) der erfolgreichen Zugriffe auf den Teil des entfernten Speichers (25', 45', 65'), welche keinen Datenaustausch mit einem entfernten Modul benötigen;
- einen Zähler (92) der nicht erfolgreichen Zugriffe auf den Teil des entfernen Speichers (25', 45', 65'), welche mindestens einen Datenaustausch mit einem entfernten Modul benötigen, wobei auf die vier Zähler (81, 82, 91, 92) lokal über das Bussystem (7) im Ein/Ausgabemodus zugegriffen werden kann, so dass eine reelle Zeitmessung der Verteilung der schnellen Zugriffe zum Speicher, die keinen Datenaustausch zur Sicherstellung eines zusammenhängenden Pufferspeichers benötigen, und der langsamen Zugriffe zum Speicher, die mindestens einen Datenaustausch zur Sicherstellung eines zusammenhängenden Pufferspeichers benötigen, möglich ist.

2. Maschine mit nichtuniformen Speicherzugriffen nach Anspruch 1, **dadurch gekennzeichnet, dass** die vier Zähler (81, 82, 91, 92) stofflich in der Verbindungseinheit (6) angeordnet sind.

3. Maschine mit nichtuniformen Speicherzugriffen nach Anspruch 1, **dadurch gekennzeichnet, dass** die Maschine
- einen Zähler (88) zum Aufsummieren der Verzögerungen der Zugriffe auf den Teil des lokalen Speichers (5'), welche einen Datenaustausch mit einem entfernten Modul, benötigen;
- einen Zähler (98) zum Aufsummieren der Verzögerungen der entfernten Zugriffe auf den Teil des Speichers (25', 45', 65'), welche einen Datenaustausch mit einem entfernten Modul benötigen;
umfasst.

4. Maschine mit nichtuniformen Speicherzugriffen nach Anspruch 4, **dadurch gekennzeichnet, dass** die zwei Zähler (88, 98) zum Aufsummieren der Verzögerungen der Zugriffe stofflich in der Verbindungseinheit (6) angeordnet sind.

5. Maschine mit nichtuniformen Speicherzugriffen nach Anspruch 3 oder 4, **dadurch gekennzeichnet, dass** auf die zwei Zähler (88, 98) zum Aufsummieren der Verzögerungen der Zugriffe über das Bussystem (7) im Ein-/Ausgabemodus zum Auslesen zugegriffen wird.

6. Maschine mit nichtuniformen Speicherzugriffen nach einem der Ansprüche 1 bis 5, **dadurch gekennzeichnet, dass** die Verbindungseinheit (6) ein Register (86) zur Steuerung der Zähler (81, 82, 88, 91, 92, 98) und ein Zustandsregister (87) der Zähler (81, 82, 88, 91, 92, 98) aufweist, wobei auf das Register (86) zur Steuerung über das Bussystem (7) im Ein-/Ausgabemodus zum Einschreiben und Auslesen zugegriffen wird, und auf das Register (87) zur Steuerung über das Bussystem (7) im Ein-/Ausgabemodus zum Auslesen zugegriffen wird.

7. Verfahren zur Berechnung der mittleren Speicherzugriffszeit in Realzeit in einer Maschine zur Informationsverarbeitung mit nichtuniformen Speicherzugriffen und zusammenhängenden Pufferspeichern, welches umfasst:
- einen lokalen Schreib-/Lesezugriff im Ein-/Ausgabemodus auf einen ersten Zähler (81) der erfolgreichen Zugriffe auf einen Teil des lokalen Speichers (5'), auf einen zweiten Zähler (82) der nicht erfolgreichen Zugriffe auf den Teil des lokalen Speichers (5'), auf einen dritten Zähler (91) der erfolgreichen Zugriffe auf einen Teil des entfernten Speichers (25, 45, 65), auf einen vierten Zähler (92) der nicht erfolgreichen Zugriffe auf den Teil des entfernten Speichers (25, 45, 65) bei Fehlen von Eingabestörungen von Speicherzugriffen,
- eine Multiplikation des Inhalts der Werte des ersten (81), zweiten (82), dritten (91) und vierten (92) Zählers der Zugriffe jeweils während einer mittleren Zeit eines erfolgreichen Zugriffs auf den Teil des lokalen Speichers, einer mittleren Zeit eines nicht erfolgreichen Zugriffs auf den Teil des lokalen Speichers, einer mittleren Zeit eines erfolgreichen Zugriffs auf den entfernten Teil des lokalen Speichers, einer mittleren Zeit eines nicht erfolgreichen Zugriffs auf den entfernten Teil des lokalen Speichers,
- eine Aufsummierung der so erhaltenen Ergebnisse,
- und eine Division dieser Summe durch die Summe der Inhalte der vier Zähler (81, 82, 91, 92) der Zugriffe.

8. Verfahren zur Berechnung der mittleren Speicherzugriffszeit in Realzeit in einer Maschine zur Informationsverarbeitung mit nichtuniformen Speicherzugriffen und zusammenhängenden Pufferspeichern, welches umfasst:
- einen lokalen Schreib-/Lesezugriff im Ein-/Ausgabemodus auf einen Zähler (81) der erfolgreichen Zugriffe (5') auf einen Teil des lokalen Speichers und auf einen weiteren Zähler (91) der erfolgreichen Zugriffe auf einen Teil des entfernten Speichers (24, 25, 26), bei Fehlen von Eingabestörungen von Speicherzugriffen,
- eine Multiplikation des Inhalts der Werte Zählers der Zugriffe (81) und des weiteren Zählers der Zugriffe (91) jeweils während einer mittleren Zeit eines erfolgreichen Zugriffs auf den Teil des lokalen Speichers, und während einer mittleren Zeit eines erfolgreichen Zugriffs auf den Teil des entfernten Speichers,
- eine Aufsummierung der so erhaltenen beiden Ergebnisse mit den Inhalten eines Zählers (88) zur Summierung der Verzögerungen der Zugriffe auf den Teil des lokalen Speichers (5'), welche einen Datenaustausch mit einem entfernen Modul benötigen, und eines Zählers (98) zur Summierung der Verzögerungen der Zugriffe auf den Teil des entfernten Speichers, welche einen Datenaustausch mit einem entfernen Modul (20, 40, 60) benötigen,
- und eine Division dieser Summe durch die Summe der Inhalte der beiden Zähler (81, 82) der erfolgreichen Zugriffe und der beiden Zähler (82, 92) der nicht erfolgreichen Zugriffe.

## Claims

1. Computer machine with non-uniform access memory (15) consisting of several modules (10, 20, 40, 60), each module comprising a unit (6, 26, 46, 66) for connection to the other modules, the unit (6) at least comprising a table (8) for handling local accesses to a local memory part (5') at the module (10) and a table (9) for handling accesses to a memory part (25', 45', 65') remote from the module (10), the said accesses being made by means of a system bus (7), the machine comprising, for each module:
- a counter (81) of accesses to the local memory part (5') served without the need for any transaction with a remote module;
- a counter (82) of accesses to the local memory part (5') requiring at least one transaction with a remote module;
- a counter (91) of accesses to the remote memory part (25', 45', 65') served without the need for any transaction with a remote module;
- a counter (92) of accesses to the remote memory part (25', 45', 65') missed, requiring at least one transaction with a remote module, the said four counters (81, 82, 91, 92) being accessible on the system bus (7) locally on input-output mode, which enables measuring in real time the distribution of accesses on fast memory which do not require any transaction to ensure cache memory coherence and slow memory accesses which require at least one transaction to ensure cache memory coherence.

2. Machine with non-uniform access memory according to Claim 1, **characterised in that** the four counters (81, 82, 91, 92) are materially located in the unit (6).

3. Machine with non-uniform access memory according to Claim 2, **characterised in that** the machine comprises:
- a counter (88) to accumulate the latencies of access to the local memory part (5') which require a transaction with a remote module;
- a counter (98) to accumulate the latencies of access to the remote memory part (25', 45', 65') which require a transaction with a remote module.

4. Machine with non-uniform access memory according to Claim 4, **characterised in that** the two counters (88, 98) for accumulating latencies of access are materially located in the unit (6).

5. Machine with non-uniform access memory according to Claim 3 or 4, **characterised in that** the two counters (88, 98) for accumulating latencies of access are accessible on read on the system bus (7) on input-output mode.

6. Machine with non-uniform access memory according to one of the Claims 1 to 6, **characterised in that** the unit (6) comprises a register (86) for checking the counters (81, 82, 88, 91, 92, 98) and a register (87) for checking the state of the counters (81, 82,88, 91, 92, 98), the checking register (86) being accessible on write and on read on the system bus (7) on input-output mode, the checking register (87) being accessible on read on the system bus (7) on input-output mode.

7. Process for calculating in real time the average time of access on memory (11) in a computer machine with non-uniform access and cache memory coherence memory, consisting of:
- accessing locally on read/write on input-output mode a first counter (81) of accesses to a local memory part (5) served, a second counter (82) of accesses to the local memory part (5) missed, a third counter (91) of accesses to a remote memory part (25, 45, 65) served, a fourth counter of accesses (92) to the remote memory part (25, 45, 65), missed, in the absence of any memory access disturbance being introduced;
- multiplying the contents of the figures of the first (81), second (82), third (91) and fourth (92) counters of accesses respectively by an average time of one access to the local memory part served, an average time of one access to the local memory part missed, an average time of one access to the remote memory part served, an average time of one access to the remote memory part missed;
- adding together the four results thus found;
- and dividing this sum by the sum of the contents of the four access counters (81, 82, 91, 92).

8. Process for calculating in real time the average time of access on memory in a computer machine with non-uniform access and cache memory coherence, which consists in:
- accessing locally on read/write on input-output mode a counter (81) of accesses to a local memory part (5) served and another counter (91) of accesses to the remote memory part (24, 25, 26) served, in the absence of any memory access disturbance being introduced;
- multiplying the contents of the figures of this access counter (81) and of this other access counter (91) respectively by an average time for one access to the local memory part served and by the average time of one access to the remote memory part served;
- adding together the two results thus found with the contents of a counter (88) in order to accumulate the latencies of access to the local memory part (5) which require a transaction with a remote module, and of a counter (98) in order to accumulate latencies of access to the remote memory part which require a transaction with a remote module (20, 40, 60);
- and dividing this sum by the sum of the contents of the two access counters served (81, 91) and of two missed access counters (82, 92).
